Europäisches Patentamt

European Patent Office

Office européen des brevets

(11) Veröffentlichungsnummer: **0 458 223 A2**

## (12) EUROPÄISCHE PATENTANMELDUNG

(21) Anmeldenummer: **91108070.3**

(22) Anmeldetag: **18.05.91**

(51) Int. Cl.5: **G01N 21/59**, G01J 3/42

(30) Priorität: **23.05.90 DE 9005845 U**

(43) Veröffentlichungstag der Anmeldung:
**27.11.91 Patentblatt 91/48**

(84) Benannte Vertragsstaaten:
**CH DE FR LI NL**

(71) Anmelder: **Firma Carl Zeiss**

**W-7920 Heidenheim (Brenz)(DE)**

(72) Erfinder: **Hohberg, Gerhard, Dr.**
**Hornbergstrasse 13**
**W-7080 Aalen-Dewangen(DE)**
Erfinder: **Matthes, Axel**
**Bussardweg 10**
**W-7923 Königsbronn(DE)**
Erfinder: **Schlemmer, Harry, Dr.**
**Einsteinstrasse 16**
**W-7082 Oberkochen(DE)**

(54) Vorrichtung zur Messung der Absorption von transparenten Proben mit ungünstiger Aussenform.

㊵ Vorrichtung zur Messung der Absorption von transparenten Proben (11, 31, 41) (z.B. Edelsteinen) bestehend aus einer Strahlungsquelle (13, 43), einer Einrichtung (14, 44, 54) (z.B. Ulbricht-Kugel) zur vielfachen Reflexion ohne Vorzugsrichtung und einer photometrischen Meßeinrichtung (15d, 46) (z.B. Diodenzeilenspektrometer), wobei die Probe (11, 31, 41) in der Einrichtung (14, 44, 54) zur vielfachen Reflexion ohne Vorzugsrichtung oder zwischen ihr und der photometrischen Meßeinrichtung (15d, 46) angeordnet ist und diffus beleuchtet wird.

Fig.1

EP 0 458 223 A2

Die vorliegende Erfindung betrifft eine Vorrichtung zur Messung der Absorption von transparenten Proben bestehend aus einer Strahlungsquelle, einer Einrichtung zur vielfachen Reflexion ohne Vorzugsrichtung und einer photometrischen Meßeinrichtung.

Zur Messung der Absorption von transparenten Proben, die eine unregelmäßige oder komplizierte Außenform haben, sind die üblichen Photometer schlecht geeignet. Für Proben, die eine für photometrische Messungen geeignete Außenform haben aber stark streuen, ist es bekannt, Photometer mit einer Ulbricht-Kugel auszurüsten.

Eine derartige Vorrichtung ist z.B. in einer Veröffentlichung von E. Wendland (GIT Fachz. Lab. 9, 993 (1988)) beschrieben. Sie besteht aus einem handelsüblichen Einstrahl-Spektralphotometer mit einem Zusatz in Form einer Integrationskugel, die allgemein als Ulbricht-Kugel bezeichnet wird. Ihre Innenfläche hat ein gutes Reflexionsvermögen und reflektiert auf sie auftreffende Strahlung ohne Vorzugsrichtung. Für die Messung an transparenten Proben hat sie zwei Öffnungen. Vor der einen Öffnung wird außen die Probe angeordnet und mit monochromatischem Licht bestrahlt, das praktisch senkrecht auf die Probe auftrifft. Die aus der Probe infolge der Streuung in einem großen Winkelbereich in die Kugel austretende Strahlung wird von der gut reflektierenden Innenfläche der Ulbricht-Kugel so oft reflektiert bis sie durch die zweite Öffnung der Kugel geht und hinter ihr auf einen Detektor trifft.

Diese bekannte Vorrichtung hat den Nachteil, daß sie sich schlecht oder gar nicht eignet für feste Proben, die keine zwei zueinander parallele Oberflächen haben, wie das z.B. bei Brillanten und anderen Edelsteinen der Fall ist. Auch bei vielen anderen festen transparenten Proben, deren Absorption oder spektrale Absorption man messen möchte, stehen ohne Bearbeitungsaufwand nicht zwei Flächen zur Verfügung, die mindestens annähernd parallel zueinander und für optische Messungen geeignet sind.

Der vorliegenden Erfindung liegt daher die Aufgabe zugrunde, eine Vorrichtung zu schaffen, mit welcher die Absorption von transparenten Proben mit ungünstiger Außenform möglichst gut gemessen werden kann.

Die gestellte Aufgabe wird durch die Erfindung dadurch gelöst, daß die Probe in der Einrichtung zur vielfachen Reflexion ohne Vorzugsrichtung oder zwischen ihr und der photometrischen Meßeinrichtung angeordnet ist und diffus beleuchtet wird. Wichtig ist dabei, daß die Probe aus einem möglichst großen Winkelbereich beleuchtet wird.

In einer vorteilhaften Anordnung ist eine glatte Fläche der Probe der photometrischen Meßeinrichtung zugewandt. Besonders vorteilhaft ist es, als Auflagefläche für die Probe eine Glasplatte vorzusehen, durch welche die von der Probe durchgelassene Strahlung zur photometrischen Meßeinrichtung gelangt. Insbesondere wenn die Probe keine glatte Fläche hat, ist es vorteilhaft, zwischen sie und die Glasplatte eine im interessierenden Spektralbereich absorptionsfreie Flüssigkeit zu bringen.

In einer weiteren vorteilhaften Ausführungsform ist zwischen der Probe und der photometrischen Meßeinrichtung ein Lichtleiter angeordnet, welcher einen Teil der durch die Probe hindurchgegangenen Strahlung aufnimmt. Besonders vorteilhat ist es, als photometrische Meßeinrichtung ein Diodenzeilenspektrometer zu verwenden.

In einer anderen Ausführungsform besteht die photometrische Meßeinrichtung aus mindestens einem Filter und einem lichtelektrischen Empfänger. Diese können bei Verwendung einer Linse oder eines Lichtleiters von der Probe entfernt angeordnet sein.

In einer weiteren Ausgestaltung der Erfindung enthält die photometrische Meßeinrichtung einer Referenzeinrichtung.

Die Strahlungsquelle kann in der Einrichtung zur vielfachen Reflexion ohne Vorzugsrichtung angeordnet sein. Dann ist es besonders vorteilhaft, eine Blitzlichtlampe zu verwenden.

Die Strahlungsquelle kann auch über eine abbildende Optik an die Einrichtung zur vielfachen Reflexion ohne Vorzugsrichtung angeschlossen sein.

Für viele Proben ist es vorteilhaft, die Auflagefläche auf der Glasplatte als Streuscheibe auszubilden.

Besonders vorteilhaft ist es, als Einrichtung zur vielfachen Reflexion ohne Vorzugsrichtung eine Ulbricht-Kugel zu verwenden. Es sind jedoch auch andere Ausführungsformen möglich, z.B. ein zylinderförmiges Gehäuse, dessen Innenflächen mit einem gut und diffus reflektierenden Belag versehen sind.

Bei großen Proben ist es möglich, die Probe in einem zylinderförmigen Rohr anzuordnen, welches eine reflektierendes Innenfläche hat und an die Einrichtung zur vielfachen Reflexion ohne Vorzugsrichtung angesetzt ist.

Die Erfindung wird im folgenden anhand von in den Figuren 1 bis 5 dargestellten Ausführungsbeispielen näher erläutert.

Dabei zeigen

Figur 1    eine Vorrichtung zur Messung der spektralen Absorption;

Figur 2    den Messkopf der in Figur 1 dargestellten Vorrichtung in vergrößerter Darstellung;

Figur 3    einen Zusatz für den Meßkopf zur Messung von großen Proben;

Figur 4    eine Vorrichtung zur Messung der Absorption bei einer oder wenigen Wellenlängen und

Figur 5 eine zylinderförmig ausgebildete Einrichtung zur vielfachen Reflexion ohne Vorzugsrichtung.

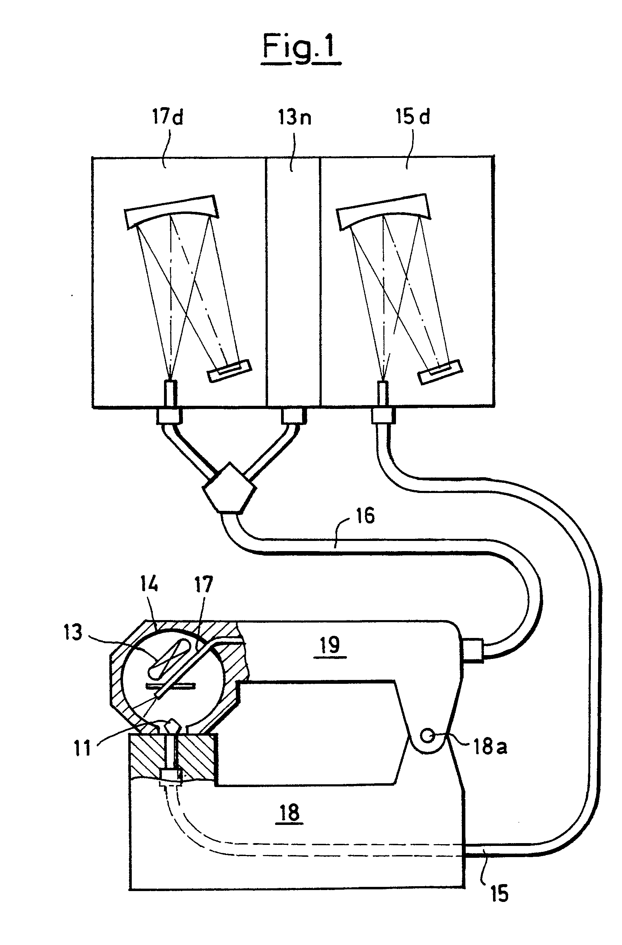

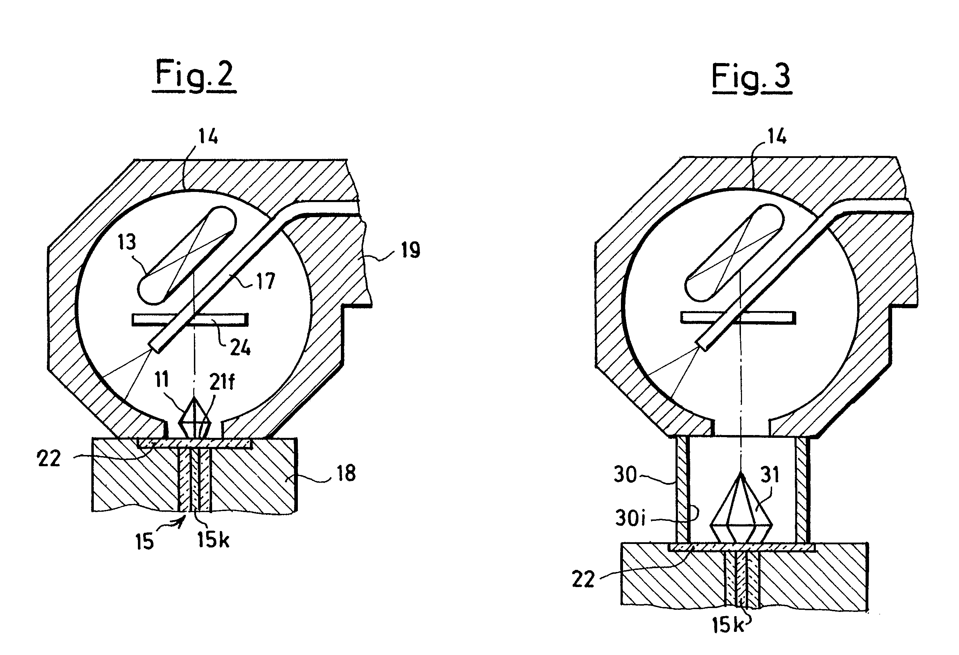

In Figur 1 ist mit (11) eine Probe bezeichnet, die zusammen mit dem Meßkopf der Vorrichtung in Figur 2 vergrößert dargestellt ist. Die Probe (11), z.B. ein Edelstein, sitzt mit einer möglichst großen, glatten oder einer ausgezeichneten Fläche (21f) auf einer Glasplatte (22), deren Auflagefläche als Streuscheibe ausgebildet sein kann. Die Probe (11) wird von der Blitzlampe (13) über die Ulbricht-Kugel (14) diffus beleuchtet. Eine direkte Beleuchtung wird durch den Schatter (24) verhindert, der ebenso wie die Ulbricht-Kugel (14) eine gut und diffus reflektierende Oberfläche hat.

Die durch die Probe (11) hindurchgegangene Strahlung wird vom Kern (15k) des Lichtleiters (15) erfaßt, der sie zum Eingangsspalt des Diodenzeilenspektrometers (15d) leitet, welches den spektralen Verlauf der durch die Probe (11) gegangenen Strahlung feststellt und einer (nicht dargestellten) Auswerteeinheit zuführt.

Als Blitzlampe ist z.B. der Typ BGG 1015 Z1 der Fa. Heimann geeignet. Sie wird über das Kabel (16) aus dem Netzteil (13n) mit der notwendigen Spannung versorgt. Da die Strahlungsverteilung von Blitz zu Blitz Schwankungen unterworfen ist, ist es bei diesem Ausführungsbeispiel angebracht, gleichzeitig mit der Messung der Probe (11) eine Referenzmessung durchzuführen. Hierfür wird durch den Lichtleiter (17) die reflektierte Strahlung von einem Bereich der Ulbricht-Kugel (14) erfaßt, der ebenfalls von der Blitzlampe (13) nicht direkt beleuchtet wird. Diese Strahlung wird einem zweiten Diodenzeilenphotometer (17d) zugeführt, dessen Meßwerte ebenfalls der Auswerteeinheit übermittelt werden, welche die Meßwerte in bekannter Weise auswertet.

In einer vorteilhaften Ausgestaltung der Erfindung ist die Glasplatte (22) Bestandteil eines unteren Geräteteiles (18) mit einem Achslager (18a), um dessen Achse das Oberteil (19) mit der Ulbricht-Kugel (14) nach oben geschwenkt werden kann und damit die Auflagefläche der Glasplatte (22) zugänglich macht.

Figur 3 zeigt einen Zusatz zu der oben beschriebenen Vorrichtung, mit dem es möglich ist, eine Probe (31) zu messen, die für die in Figur 2 dargestellte Vorrichtung zu groß ist. Hierfür wird ein zylinderförmiges Rohrstück (30) benutzt, das eine gut reflektierende Innenfläche (30i) hat. Ein derartiger Zusatz ist aus der DE-OS 38 18 815 für die Messung an reflektierenden Proben mit einer Ulbricht-Kugel bekannt.

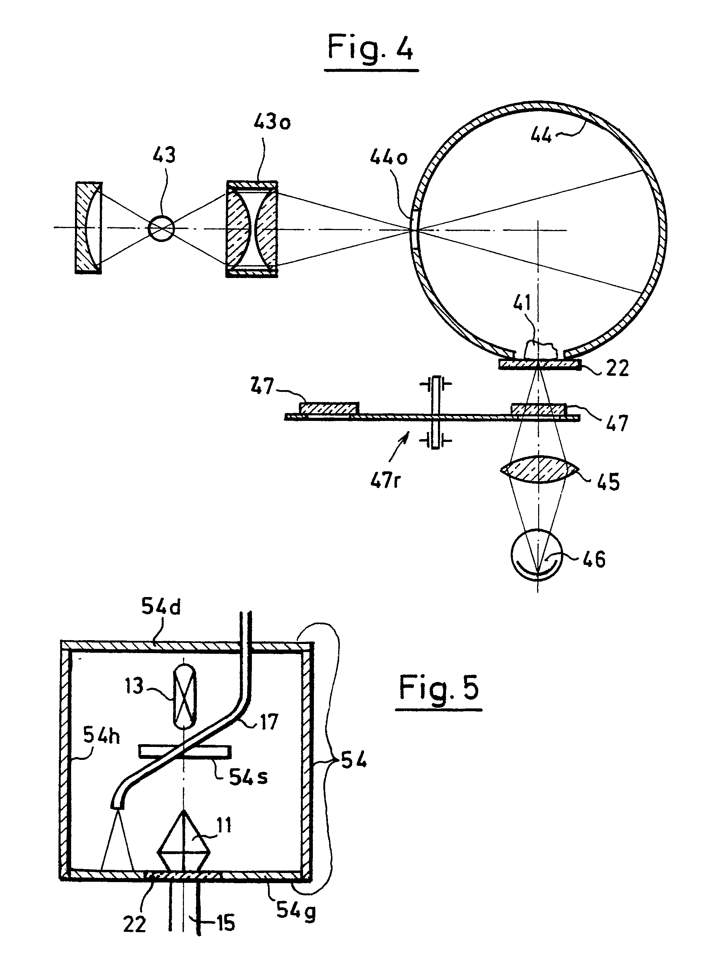

In Figur 4 ist ein Beispiel für die Messung bei einer oder mehreren Wellenlängen dargestellt, wobei außerdem auf eine Einrichtung zur gleichzeitigen Referenzmessung verzichtet ist. Daher wird eine Strahlungsquelle (43) verwendet, die so lange Zeit mit gleicher Strahlungsleistung betrieben wird bis eine Referenzmessung ohne Probe oder mit einem Standard und mindestens eine Probe gemessen ist. Die Strahlungsquelle (43), z.B. eine Halogenlampe oder eine Spektrallampe, wird in bekannter Weise durch das Objektiv (43o) in die Öffnung (44o) der Ulbricht-Kugel (44) abgebildet und beleuchtet infolge zahlreicher Reflexionen die Probe (41) ohne Vorzugsrichtung.

Entsprechend der Erfindung sitzt die Probe mit einer möglichst glatten Fläche wieder auf einer Glasplatte (22), deren Auflagefläche als Streuscheibe ausgebildet sein kann. Die Auflagefläche der Glasplatte (22) wird durch die Linse (45) annähernd auf den lichtelektrischen Empfänger (46) abgebildet. Messung und Auswertung erfolgen auf die bei Einstrahlphotometern bekannte Weise. Zwischen Probe (41) und Empfänger (46) sind entweder ein Filter oder mehrere Filter (47) in einem Filterrad (47r) angeordnet.

Natürlich ist es auch möglich, Filter und Empfänger ohne Verwendung einer Linse dicht hinter der Probe anzuordnen.

In Figur 4 ist als Probe (41) kein Edelstein dargestellt, sondern eine Probe, die nur eine glatte Fläche hat, welche als Auflagefläche benutzt wird. Auch derartige Proben können bei allen beschriebenen Vorrichtungen verwendet werden und ihre Meßergebnisse ergeben in vielen Fällen ausreichende und wichtige Informationen. Falls eine Probe keine genügend glatte Fläche hat, ist es auch möglich, sie mit einer geeigneten Flüssigkeit, die im interessierenden Spektralbereich nicht absorbiert, z.B. Toluol oder Immersionsöle nach DIN 58 884, auf die Auflagefläche aufzusetzen.

Als Einrichtung zur vielfachen Reflexion ohne Vorzugsrichtung und damit zur diffusen Beleuchtung einer Probe ist die Ulbricht-Kugel gut bekannt. Für die vorliegende Erfindung sind für viele Anwendungsfälle je nach den meßtechnischen Anforderungen jedoch auch andere Ausführungsformen möglich, die preiswerter herzustellen sind als eine Kugel. Ein Beispiel ist in der Figur 5 dargestellt. Hier besteht die Einrichtung (54) zur vielfachen Reflexion ohne Vorzugsrichtung aus einem Hohlzylinder (54h), einer Grundplatte (54g) und einer Deckplatte (54d), wobei sämtliche Innenflächen mit einem gut und diffus reflektierenden Belag versehen sind. Wie in den Figuren 1 und 2 sind mit (11) die Probe, mit (22) eine Glasplatte, mit (15) der Lichtleiter für die Meßstrahlung und mit (17) der Lichtleiter für die Referenzstrahlung bezeichnet. Mit (54s) ist ein entsprechend den vorliegenden Verhältnissen ausgebildeter Schatter bezeichnet.

Es ist selbstverständlich, daß die einzelnen Elemente der beschriebenen Vorrichtungen in vielfältiger Weise kombiniert werden können. So ist es z.B. möglich, die in Figur 4 dargestellte photometrische Meßeinrichtung mit Filtern mit einer Referenzeinrichtung auszustatten oder die Blitzlampe (13) in Figur 1 durch die Beleuchtungseinrichtung von Figur 4 zu ersetzen.

**Patentansprüche**

1. Vorrichtung zur Messung der Absorption von transparenten Proben (11, 31, 41) bestehend aus einer Strahlungsquelle (13, 43), einer Einrichtung (14, 44, 54) zur vielfachen Reflexion ohne Vorzugsrichtung und einer photometrischen Meßeinrichtung (15d, 46), dadurch gekennzeichnet, daß die Probe (11, 31, 41) in der Einrichtung (14, 44, 54) zur vielfachen Reflexion ohne Vorzugsrichtung oder zwischen ihr und der photometrischen Meßeinrichtung (15d, 46) angeordnet ist und diffus beleuchtet wird.

2. Vorrichtung nach Anspruch 1, dadurch gekennzeichnet, daß eine glatte Fläche (21f) der Probe (11, 31, 41) der photometrischen Meßeinrichtung (15d, 46) zugewandt ist.

3. Vorrichtung nach Anspruch 1 oder 2, dadurch gekennzeichnet, daß als Auflagefläche für die Probe (11, 31, 41) eine Glasplatte (22) vorgesehen ist.

4. Vorrichtung nach mindestens einem der Ansprüche 1 bis 3, dadurch gekennzeichnet, daß zwischen der Probe (11, 31, 41) und der Glasplatte (22) eine im interessierenden Spektralbereich absorptionsfreie Flüssigkeit vorgesehen ist.

5. Vorrichtung nach mindestens einem der Ansprüche 1 bis 4, dadurch gekennzeichnet, daß zwischen der Probe (11, 31) und der photometrischen Meßeinrichtung (15d) ein Lichtleiter (15) angeordnet ist.

6. Vorrichtung nach mindestens einem der Ansprüche 1 bis 5, dadurch gekennzeichnet, daß die photometrische Meßeinrichtung ein Diodenzeilenspektrometer (15d) ist.

7. Vorrichtung nach mindestens einem der Ansprüche 1 bis 5, dadurch gekennzeichnet, daß die photometrische Meßeinrichtung aus mindestens einem Filter (47) und einem lichtelektrischen Empfänger (46) besteht.

8. Vorrichtung nach mindestens einem der Ansprüche 6 oder 7, dadurch gekennzeichnet, daß die photometrische Meßeinrichtung eine Referenzeinrichtung (17, 17d) enthält.

9. Vorrichtung nach mindestens einem der Ansprüche 1 bis 8, dadurch gekennzeichnet, daß die Strahlungsquelle (13) in der Einrichtung (14, 54) zur vielfachen Reflexion ohne Vorzugsrichtung angeordnet ist.

10. Vorrichtung nach Anspruch 9, dadurch gekennzeichnet, daß die Strahlungsquelle (13) eine Blitzlampe ist.

11. Vorrichtung nach mindestens einem der Ansprüche 1 bis 8, dadurch gekennzeichnet, daß die Strahlungsquelle (43) über eine abbildende Optik (43o) an die Einrichtung (44) zur vielfachen Reflexion ohne Vorzugsrichtung angeschlossen ist.

12. Vorrichtung nach mindestens einem der Ansprüche 1 bis 11, dadurch gekennzeichnet, daß die Probe (11, 21, 41) auf einer Glasplatte (12) liegt, deren Auflagefläche als Streuscheibe ausgebildet ist.

13. Vorrichtung nach mindestens einem der Ansprüche 1 bis 12, dadurch gekennzeichnet, daß die Einrichtung zur vielfachen Reflexion ohne Vorzugsrichtung eine Ulbricht-Kugel (14, 44) ist.

14. Vorrichtung nach mindestens einem der Ansprüche 1 bis 12, dadurch gekennzeichnet, daß die Einrichtung zur vielfachen Reflexion ohne Vorzugsrichtung aus einem zylinderförmigen Gehäuse (54) besteht, dessen Innenflächen mit einem gut und diffus reflektierenden Belag versehen sind.

15. Vorrichtung nach mindestens einem der Ansprüche 1 bis 14, dadurch gekennzeichnet, daß die Probe (21) in einem zylinderförmigen, innen reflektierenden Rohr (30) angeordnet ist, welches an die Einrichtung (14, 44, 54) zur vielfachen Reflexion ohne Vorzugsrichtung angesetzt ist.

# Fig.1

Fig.3

Fig.2

# Fig. 4

# Fig. 5